# EUROPEAN PATENT SPECIFICATION

(11) **EP 2 855 640 B1**
(45) Date of publication and mention of the grant of the patent: **12.08.2020**
(21) Application number: 13740373.9
(22) Date of filing: 31.05.2013
(51) Int. Cl.: F23G 5/38, F23G 5/027, C10J 3/04, C10J 3/72

(54) **ADVANCED SEQUENTIAL BATCH GASIFICATION PROCESS**
VERBESSERTES SEQUENTIELLES MASSENGASIFIZIERUNGSVERFAHREN
PROCÉDÉ DE GAZÉIFICATION DISCONTINUE SÉQUENTIELLE AVANCÉE

(30) Priority: 31.05.2012 IS 9000
(43) Date of publication of application: 08.04.2015
(73) Proprietor: Petursdottir, Lilja, Glasgow G69 8FH (GB)
(72) Inventor: EINARSSON, Fridfinnur, Glasgow G69 8 FG (GB)
(74) Representative: Arnason Faktor
(86) International application number: PCT/IS2013/050005
(87) International publication number: WO 2013/179313

(56) References cited:
- WO-A1-2008/104058
- DE-A1- 3 915 992
- US-A1- 2007 289 507

## Description

### Field of the invention

The present invention relates to an Advanced Sequential Batch Gasification Process for the thermal treatment of waste and applications to use such process for waste destruction and energy generation. The invention can also be used for the gasification of biomass and other fuels to produce useful energy.

### Background of the invention

It is a known art to use a two stage combustion process to burn combustible waste materials under substoichiometric conditions (starved air conditions). In this kind of process burn down of the waste takes place in a first chamber resulting in combustible gas and ash, where the gas is further mixed with air and combusted under super stoichiometric conditions (excess air conditions) in the second chamber. It is also a known method to use multiple first stage chambers with a common second stage chamber.

WO 2008/068781 discloses a system and a method for oxidation of waste materials. A set up of one or more gasification chambers, which are connected via ductwork to a combustion chamber, are used to burn the waste material. The waste is loaded into the gasification chamber(s) and ignited there and the gas, which is generated by the substoichiometric combustion in the gasification chamber, is fully combusted in the secondary combustion chamber at a very high temperature. Waste is burned down in a gasification chamber by providing a first stream of air flow from the bottom of chamber and is directed underneath and through the waste. A second stream of air flow is then provided from the top of the first chamber. Thereafter, a combustion step takes place in a combustion chamber, where the gas produced in the gasification chamber is exposed to high temperature. The flow of gas/air exiting the second chamber then determines the speed of air flow from the bottom inlet in the first chamber, to maintain constant flow of hot gases from the combustion chamber.

GB 2475889 discloses an apparatus for processing waste material and organic materials such as biomass having a processing chamber for processing said material at an elevated temperature, in an oxygen deficient environment, to produce syngas and a combustion chamber for combusting syngas. The apparatus further comprises a conduit means between said combustion chamber and said processing chamber for carrying hot exhaust gasses from the combustion chamber to said processing chamber and a mirror arranged to reflect and concentrate sunlight thereby to cause the temperature within said processing chamber to be raised. The apparatus also comprises an injector means for introducing oxygen or oxygen containing gas into said combustion chamber to enable complete oxidisation of the syngas.

DE 3915992 discloses a combustion device to reduce the content of nitrogen oxides in the exhaust gas, where the amount of oxygen is varied locally by means of the combustion air fed along the combustion chamber. The grate in the combustion chamber is divided into several cross sectional zones along the travel direction of the waste. External air or recirculated flue-gas or a mixture of both in various ratios is blown under the waste as the waste travels over the combustion grate and is combusted to ash.

WO 2008/104058 discloses a system for complete conversion of carbonaceous feedstock into syngas and slag comprising a primary chamber for the volatilization of feedstock and a secondary chamber for generation of syngas and a residue. The system further comprises a gas-reformulating zone for processing gas generated within one or more chambers, a melting chamber for vitrifying residue and a control system for use with the gasification system to monitor and regulate the different stages of the process to ensure the efficient and complete conversion of the carbonaceous feedstock into a syngas product.

US 2007/289507 discloses a pyrolysis system with one or more pyrolysis chambers to produce a gaseous fuel. The gaseous fuel is sent to an afterburner where other elements may be added to generate heated gas which can be used in any of a variety of devices, such as a heat exchanger or a dryer.

One of the problems of the prior art methods is control of the burn down phase in the gasification chamber. Due to complications with loading waste into the gasification chambers, distribution of the waste in the chambers is generally such that the load is lighter in the corners than it is in centre of the chamber. This is simply due to the bulkiness and non-homogeneous particle size, shape and density. Flow of gas and/or air under the waste flow a path with the least resistance, which can result in by-passing the bulk of the waste flowing up in the chamber corners rather than through the waste batch. This results in increased excess air combustion producing fully combusted flue-gas rather than gasification producing energy rich syngas. Moving the waste around in the chamber during the gasification process to solve the above problem only results in other problems related to carryover of dust particles to the down-stream process.

### Summary of the invention

The invention is an Advanced Sequential Batch Gasification Process, which has two main process stages. The first process stage consists of one or more gasification chambers, while the second process stage consists of a syngas combustion unit, such as a combustion chamber, or alternatively the syngas is routed to a boiler, gas turbine, reciprocating engine or other internal combustion device, with or without the use of a syngas conditioning chamber to condition the syngas before combustion.

Although, not according to the invention, the process can be used with only one gasification chamber for the gasification of waste, biomass or other fuels, such a setup will not allow for a sequential process. For sequential operation and production of an uninterrupted stream of syngas by gasification, according to the invention, more than one gasification chamber is needed in the same system. When run with multiple gasification chambers, sequentially, the gasification process can produce a constant flow of syngas which enables continuous production of useful energy, for example electricity.

Multiple gasification chambers are run in sequence, such that at any given time, one or more chambers are producing syngas from waste, biomass or other fuel with gasification, while one or more chambers are completing the gasification process and other chambers are offline ready to be initiated for gasification or being discharged of ash and reloaded in preparation to process another batch of waste.

The problems stated above related to waste loading and the flow of air/gas introduced into the gasification chambers are solved as follows. Each gasification chamber has a hearth with multiple nozzles at the bottom of the chamber. The nozzles penetrate through the hearth structure forming a number of small openings between the hearth top and bottom surfaces. The volume under the hearth has plenums, which separate the hearth nozzles into nozzle areas corresponding to the plenums having a shape and number defined in the volume under the hearth. Recirculated flue-gas and atmospheric air enter the bottom plenums via separate split ductwork system in which every branch has its own remotely controlled valve for each plenum section with an independent control mechanism. Each plenum section is therefore provided with separate control for recirculated flue-gas and atmospheric air respectively. This feature allows full control of recirculated gas and air flows into each nozzle area (plenum section) and when during the process the system is feed either atmospheric air or recirculated flue-gas or a mixture of both in any mixture ratio and flow rate at any time during the process, independently controlled in each plenum section.

With this system the nozzles in the centre of the hearth can be fed separately with recirculated flue gas while other plenum sections are closed off and then, when the bulk of the batch has been consumed by the gasification, the periphery of the bottom area and corners are also fed with recirculated flue-gas. At the end of the process, atmospheric air can be feed via all nozzles in the hearth to produce quality ash with practically no carbon content.

In a first aspect of the present invention a process for thermal oxidation of combustible materials is provided. The process comprises the steps of gasification of combustible materials in two or more gasification chambers, transferring syngas from the two or more gasification chambers to a combustion unit, and combustion of syngas from the gasification chambers in the combustion unit. External air, recirculated flue-gas from the combustion unit or a mixture thereof is blown under different areas of the bottom of each gasification chamber and regulated independently at different times of a gasification process via plenums and nozzles. This process is controlled by an industrial computer. The combustion unit of the first aspect of the invention may be a combustion chamber, a reciprocating engine, a boiler, a gas turbine or an internal combustion device.

In a second aspect of the present invention an apparatus for thermal oxidation of combustible materials is provided. The apparatus comprises two or more gasification chambers for gasification of combustible materials, where the two or more gasification chambers further comprise inlets at the bottom of the chamber and one or more burners. The apparatus further comprises a combustion unit for combustion of syngas from the first chamber, where the second combustion unit further comprises one or more gas inlet for receiving syngas from the gasification chambers, one or more burners, an inlet for recirculated flue-gas diverted from the system exhaust stack, an inlet for atmospheric air and an outlet for disposing of flue-gas from the combustion unit.

Thirdly the apparatus comprise a duct to transfer syngas from each of the gasification chambers to the combustion unit, the duct further comprising a valve to isolate each of the gasification chambers from the combustion unit. Furthermore the device comprises a duct for re-directing flue-gas from the outlet of the combustion unit into the one or more gasification chambers and an industrial computer. The apparatus is characterised in that the outlets at the bottom of each gasification chamber are distributed across the bottom of the chamber and connected to duct for re-directing flue-gas from the outlet via plenums and nozzles, such that air, flue-gas or a mixture thereof in any ratio is blown under different areas of the bottom of each gasification chamber and regulated independently at different times of the gasification cycle phase. The combustion unit of the second aspect of the invention may be a combustion chamber, a boiler, or a gas turbine.

### Description of the invention

The following embodiments and definitions relate to the process and the apparatus of the invention.
First process stage: Consists of two or more batch gasification chambers.
Second process stage: Is for the combustion of the syngas. This can be done either in a syngas combustion chamber or in an internal combustion device such as a gas turbine or a reciprocating engine, with or without the use of a syngas conditioning chamber in which the syngas can be mixed for consistency before flowing to the combustion device and related systems.
Syngas: Consists primarily of hydrogen, carbon monoxide, methane and various hydrocarbons and very often some carbon dioxide the gas is combustible and often used as a fuel for internal combustion engines. The energy density (heat value) of the gas and chemical composition can vary significantly. Impurities in the gas may need to be removed before it is combusted in a reciprocating engine or gas turbine. These impurities may be among other; hydrogen chloride, sulphur dioxide, salts and particulate matter. The concentrations of the impurities in the syngas depend on the composition of the waste or fuel material processed by the gasification process.
Air: Is a colourless, odourless, tasteless, gaseous mixture, mainly nitrogen (approximately 78%) and oxygen (approximately 21%) with varying amounts of moisture and particulate matter, enveloping the earth; the atmosphere, atmospheric air, ambient air.
Combustion air: Is the same as the above definition of Air, but used specifically for the purpose of combusting syngas or any type of combustible fuel.
Cooling air: Is the same as the above definition of air, but used specifically for the purpose of cooling equipment devices and equipment components.
Flue-gas: The product of complete chemical reactions of combustion of syngas and other combustible fuels with air (as the above definition of air) and to a lesser degree recirculated flue-gas (as per the below definition of recirculated flue-gas). The oxygen concentration in flue-gas is typically 3-11%.
Recirculated flue-gas: Is the same as the above defined flue-gas but specifically diverted from the system exhaust stack to be used for specific purposes in the gasification system process.
Gas/air mixture: Is a mixture in any ratio of recirculated flue-gas as per the above definition and air as per the above definition.

The following embodiments disclose systems having two or more chambers of the first process stage (gasification chambers) connected via ductwork to a second process stage chamber (a syngas combustion chamber or a syngas conditioning chamber). The waste material, fuel or biomass is loaded into the gasification chambers and ignited there.

The syngas generated by the gasification flows to the syngas combustion chamber and is combusted there for the production of flue-gas for an energy recovery system.

The system is controlled by an industrial control computer to which various instruments and equipment is connected, such as; thermocouples (thermometers), fan speed controls, burner controls, valve actuators, pressure sensors, limit switches, oxygen sensors and many other devises used for input signals and controlled output signals.

In an embodiment of the present invention the combustible materials comprise waste, fuel or biomass.

In an embodiment of the present invention the combustion unit is a combustion chamber, reciprocating engine, boiler, gas turbine or an internal combustion device.

In an embodiment of the present invention the flow of fully combusted flue gas from the combustion unit is regulated by varying the production of syngas in the two or more gasification chambers by a feedback signal.

In an embodiment of the present invention the combustion unit is a combustion chamber. In such embodiments the feedback signal is a signal from a steam flow meter, a meter of power output, speed indicator from the ID fan, flow signal from the outlet of the combustion unit or a combination thereof.

In an embodiment of the present invention the combustion unit is a reciprocating engine, boiler, gas turbine or an internal combustion device. In such embodiments the feedback signal is a measure of the power output of the reciprocating engine generator set, power output of the gas turbine generator set, or steam flow output from the boiler that the syngas is combusted in, where the output is proportional to the flow of syngas to the respective combustion unit.

In an embodiment of the present invention the device is set up such that a syngas conditioning chamber is connected to the two or more gasification chambers and the syngas is directed through ducts to the syngas conditioning chamber from the gasification chambers to mix the syngas from the gasification chambers before it is routed to the combustion unit. The gasification chambers are then connected to the combustion unit with ducts. The syngas conditioning chamber is used as a part of the second process stage to mix the syngas from the multiple gasification chambers to provide a consistent quality of syngas to the second process stage combustion, where the syngas combustion takes place in a boiler, reciprocating engine, gas turbine or internal combustion device. The syngas conditioning chamber is an insulated chamber in which the various flows of syngas from the multiple gasification chambers are given some time to mix to produce a consistent mixture of syngas, without the addition of any oxygen containing gases.

Syngas from the gasification of waste materials, fuels or biomass, containing little or no salts, chlorine, sulphur, acidic compounds, heavy metals or other impurities can be routed directly via manifold for combustion to a boiler, gas turbine, reciprocating engine or other internal combustion device without conditioning in a conditioning chamber.

In an embodiment of the present invention where the combustion takes place in a boiler, reciprocating engine, gas turbine or internal combustion device the syngas flows from the two or more gasification chambers is mixed to form a uniform quality of syngas with or without additional syngas cooling, purification and/or cleaning before combustion.

Syngas containing elevated levels of impurities such as sulphur compounds, hydrogen chloride, salts or other need to be conditioned and cleaned. After the conditioning chamber as described above the gases will enter a recovery boiler to cool the gas then the gas goes to a water-quench vessel where multiple high pressure water nozzles will spray water to mix with the syngas and dissolve the impurities, the syngas may also be directed directly to the quench vessel. The water moisture and droplets are removed from the syngas in a moisture separator. The impurities are removed from the quench water by neutralization and filtering, alternatively the syngas can be filtered through a dry filtration system. The syngas flows on from the moisture separator or alternative dry filtrations system to a boiler, reciprocating engine, gas turbine or other internal combustion device for combustion.

According to the present invention the flow of the external air and the recirculated flue-gas in each plenum section area is regulated independently in each plenum section area such that at any given time mixture ratio of recirculated flue-gas and external air can be different from one section area to the next. This is done by varying the level of opening of each of the valves on the ducts between the recirculated flue-gas and the external air fans respectively to the plenums in the various areas of the hearth.

In an embodiment of the present invention the overall flow of air and recirculated flue-gas to the hearth sections is collectively regulated by controlling the speed of the fans respectively such that at any given time the overall flow of gas/air mixture is controlled with a feedback signal to control the rate of the syngas production.

In an embodiment of the present invention the two or more gasification chambers are each surrounded by a cooling jacket compartment(s) for cooling the gasification chamber. In such embodiments air, water, thermal oil or other fluid are used as cooling media in the cooling jacket compartment(s). When the gasification chambers are cooled by cooling media such as air, water, or other cooling fluid or a combination of any of these with a cooling jacked compartment on the chambers, cooling the chamber walls, ceiling, bottom and syngas exit duct as needed by controlled flow of the cooling media. In the case of air cooling the cooling air can be used as pre-heated combustion air in the syngas combustion chamber or other use where there is need for warmed air. In the case of water cooling the primary chamber cooling jacket compartment(s) can be used to preheat boiler water or any other use where there is need for heated water. An example of other cooling fluids is heating oil which is in some cases used in closed circuit turbine systems and/or utilising thermal oil as working media for industrial or space heating purposes.

In an embodiment of the present invention the mixture of external air flow and recirculated flue-gas mixed in any ratio is introduced into the combustion unit for the combustion of syngas. In such an embodiment the external air flow introduced into the combustion chamber is heated air from the cooling compartment of the gasification chamber.

In an embodiment of the present invention the flow of fully combusted flue gas is regulated by varying the production of syngas in the gasification chambers by a feedback signal from devices such as, but not limited to draught sensors, thermocouples, fan speed indicators, steam flow meters, oxygen concentration meters and power production indicators.

In an embodiment of the present invention the gas/air mixture flow into the two or more gasification chambers is independently controlled between the gasification chambers. In this embodiment the gas/air mixture flow from the bottom of the first process stage chamber(s) is independently controlled.

In an embodiment of the present invention a controlled ratio of the mixture of air and recirculated flue-gas flow is introduced under the waste batch in the gasification chambers via plenums and nozzles which are separated into areas and sections, where the air and recirculated flue-gas ration can be controlled independently in each plenum section and blown through corresponding nozzles into each of the gasification chambers. The gasification chamber bottom structures have internally structured gas/air plenums which are divided into several sections where each section covers a part of the bottom hearth area, each area have a set of nozzles which penetrate from the plenum through the hearth into the chamber under the waste. By this arrangement the air and flue-gas flows and mixture ratio can be individual controlled in each hearth section. There are no particular limitations to the area size, shape or number of sections in each chamber, although 9 sections (3X3) in each chamber may be a preferable division due to the ability to specifically control the corners, sides and the centre areas of the chamber hearth independently of each other. Other preferable options of division may be 12 sections (3X4) or 16 sections (4x4) in each chamber. Other divisions may form two dimensional areas such as an inner (centre) area and an outer (peripheral) or surrounding area.

The waste load is generally lightest in the corners and heaviest in the centre of the chamber simply due to the bulkiness of the waste and the complications of loading material which is not of homogeneous shape, size or density into a cuboid shaped void in a chamber with a rectangle shaped opening on top for loading, even a cylindrically shaped chamber would have similar problems.

The intensity of the air and recirculated flue-gas flow under the various plenum sections areas under the waste batch is very important to ensure production of high heat value quality syngas, rather than fully combusted flue-gas. If the same flow intensity is used throughout the whole bottom hearth plenums area through the whole operation sequence the mixture of air and recirculated flue-gas can by-pass the waste batch by flowing from the nozzles in the chamber corners and flow around the waste batch rather than through the batch. If this happens more fully combusted flue-gas will be produced by excess air combustion rather than high heat value syngas produced by gasification.

In an embodiment of the present invention where the combustion takes place in a combustion chamber a gas/air mixture is introduced into the combustion chamber for the combustion of syngas.

In an embodiment of the present invention where the combustion takes place in a combustion chamber a flow of syngas, external air and recirculated flue-gas into the entry end of the combustion chamber is automatically controlled to ensure a controlled residence time, temperature and the final oxygen concentration of the flue-gas.

In an embodiment of the present invention the flow of flue-gas exiting the combustion chamber determines the flow rate of the gas/air mixture flow through the bottom plenums and nozzles under the waste batch in the first process chamber and therefore determines the rate of the syngas production.

Where the combustion takes place in a combustion chamber the combustion of syngas in the combustion chamber is performed at a pre-set desired temperature and at a controlled pre-set flow rate. Controlled flow of combustion air is provided to the second process stage chamber. A controlled flow of recirculated flue-gas is also provided to the second stage process chamber at the same entry point as the combustion air. This recirculated flue-gas is used with the combustion air to complete the combustion of the syngas from the first process stage chambers and control the final oxygen concentration in the flue-gas from the second process stage chamber. In this embodiment the gas and air mixture from the bottom plenum and nozzles under the waste in the first process stage chambers is independently controlled, and then the flow of syngas from the first process stage chamber flowing into the second process stage chamber regulates the flow of flue-gas from the second process stage chamber.

A syngas manifold may be used to route the syngas flowing directly from the multiple gasification chambers to the second process stage, where the syngas combustion takes place in a boiler, reciprocating engine, gas turbine or internal combustion device.

In an embodiment of the present invention where the combustion takes place in a boiler, reciprocating engine, gas turbine or internal combustion device the power output of the boiler, reciprocating engine, gas turbine or internal combustion device determines the production of syngas generated in the gasification chambers by a feedback signal.

In an embodiment of the present invention where the combustion takes place in a boiler, reciprocating engine, gas turbine or internal combustion device the power output of the boiler, reciprocating engine, gas turbine or internal combustion device determines the flow rate of gas/air mixture flow through the bottom plenums and nozzles under the waste batch in the gasification chamber(s).

In an embodiment of the present invention the gas/air mixture flow from the bottom plenum and nozzles under the waste in the first process stage chambers is independently controlled in each first stage chamber. A first stage chamber which was started first will have progressed into the gasification process and will therefore have higher flow of gas/air mixture flowing under the waste than the chamber which was started later. The gasification progresses has increasing need for gas/air mixture as the lighter chemical compounds (higher hydrogen content) will be consumed by the gasification sooner than the heavier compounds (higher carbon content). Therefore, at any given time the gas/air mixture flow may be for example at about 3/4^{th} the maximum flow in one chamber while the next one will be at about 1/4^{th} the maximum flow but both would idle up and down in parallel motion depending on the need for syngas flow. Then the flow of syngas from the first process stage chamber flowing into the second process stage chamber regulates the flow of flue-gas from the second process stage chamber.

In an embodiment of the present invention the oxygen concentration of the external air and the recirculated flue-gas mixture in each plenum section area is regulated independently by such that at any given time mixture ratio of recirculated flue-gas and external air can be different from one section area to the next. This is done by varying the level of opening of each of the valves on the ducts between the recirculated flue-gas and the external air fans respectively to the plenums in the various areas of the hearth. The gas/air plenums are fed with a controlled flow of atmospheric air or recirculated flue-gas, or a mixture of both in a controlled ratio. The recirculated flue-gas is diverted from the process exhaust stack ductwork and mixed with atmospheric air on the entry in to the plenums. Controlled and lowered concentration of oxygen reduces the production of nitrogen oxides. Also, the use of hot mixture of air and recirculated flue-gas with lower oxygen concentration for the gasification; produces higher heat value syngas than using colder and higher oxygen concentration such as atmospheric air.

Three independent control features are provided for the mixture of air and recirculated flue-gas which is fed through the nozzles in the bottom hearth under the waste batch. These are:
- Control of oxygen concentration (mixture ratio) of the air and recirculated flue-gas mixture independently in each plenum section area
- Control of air and recirculated flue-gas mixture flow independently to individual plenum section area
- Control of overall flow of air and recirculated flue-gas mixture to the hearth sections collectively

The whole process is controlled by means of an industrial computer controlling gas and air flow rates with remotely controlled valves, fans, burners and other instruments with respect to various feedback signals from the process such as draught sensors, thermocouples, fan speeds indicators, steam flow meters, oxygen concentration meters and power production indications.

The total combined flow of syngas from all chambers governs the production and flow of fully combusted flue-gas flowing from the syngas combustion chamber. This flow of flue-gas is controlled and maintained at a consistent flow rate which is extremely important for efficient recovery of useful energy and effective emissions control. The flow of this fully combusted flue gas is controlled by varying the production of syngas in the gasification chambers and the production of syngas is varied by increasing or decreasing the flow of air and recirculated flue gas mixture blown through the air/gas plenums and nozzles under the waste batch in the gasification chambers.

The feedback signal used for this can be of a few different types, in the case of utilizing the syngas in a syngas combustion chamber and recovery boiler the following can for example be used as feedback signals:
- The power output of a steam turbine generator system which is proportional to the steam flow from the boiler, which again is proportional to the flow of flue-gas from the syngas combustion chamber.
- Steam flow meter signal which is proportional to the flow of flue-gas from the syngas combustion chamber.
- Speed indication of ID fan which indicates the total flow of flue-gas from the syngas combustion chamber.
- A measure of the flow of flue-gas flowing from the syngas combustion chamber

In the case of utilizing the syngas in a reciprocating engine, gas turbine, boiler or other internal combustion device, the following can for example be used as feedback signal:
- The power output of the reciprocating engine generator set, which is proportional to the flow of syngas to the engine.
- The power output of the gas turbine generator set, which is proportional to the flow of syngas to the gas turbine.
- The steam flow from the boiler that the syngas is combusted in. The steam flow is proportional to the flow of syngas to the boiler.

The waste load is generally lightest in the corners and heaviest in the centre of the chamber simply due to the bulkiness of the waste and the complications of loading material which is not of homogeneous size, shape and density into a cuboid shaped void in a chamber with a rectangle shaped opening on top for loading.

The intensity of the air and recirculated flue-gas flow under the various plenum sections areas under the waste batch is very important to ensure production of high heat value quality syngas, rather than fully combusted flue-gas. If the same flow intensity is used throughout the whole bottom hearth plenums area through the whole operation sequence the mixture of air and recirculated flue-gas can by-pass the waste batch by flowing from the nozzles in the chamber corners and flow around the waste batch rather than through the batch. If this happens more fully combusted flue-gas will be produced by excess air combustion rather than high heat value syngas produced by gasification. It is also beneficial to use higher oxygen concentration and even flow distribution in all plenum areas at the end of the process of each batch to ensure full burnout of all carbon in the waste to produce high quality ash. The solution provided herein allows for full control of the flow of air and recirculated flue-gas due to the separated plenum sections and nozzle areas in the gasification chambers of the present invention.

The above mentioned control features are therefore very beneficial to achieve better production of high heat value syngas as well as producing high quality ash with little to no carbon content.

The syngas can be combusted in a syngas combustion chamber where the preheated air from the gasification chamber jacket compartment(s) cooling system is used as combustion air for the combustion of the syngas. Recirculated flue-gas diverted from the system exhaust stack ductwork is also used with the combustion air such that the total concentration of combustion gas/air is reduced and controlled. With this the final oxygen concentration of the fully combusted flue-gas is controlled to a desired level. The reduced oxygen concentration reduces the production of undesirable nitrogen oxides (pollutants) which otherwise would have to be reduced with chemical treatment in the syngas combustion chamber or downstream of it. Production of nitrogen oxides are promoted by high oxygen concentration and high temperature. The recirculation of the flue-gas also increases the overall efficiency of the system. The fully combusted flue-gas from the syngas combustion chamber can be routed to an energy recovery boiler system for multiple purposes for example to heat water for various use, steam production for industrial use or for a conventional Rankin cycle turbine system producing electricity.

### Description of drawings

The invention is further disclosed in the drawings, where the process and the components of the inventions are outlined in drawings and with text for further explanation.
Figure 1 is a schematic drawing of the components of a version of the system where the second process stage chamber is a syngas combustion chamber.
Figure 2 shows schematically an alternative version of the system, where the syngas is combusted in a reciprocating engine or a gas turbine after passing through a syngas conditioning chamber and a syngas cleaning system.
Figure 3 shows schematically an alternative version of the system, where the syngas is combusted directly in a boiler, reciprocating engine, gas turbine or other internal combustion device without passing through a syngas conditioning chamber or syngas cleaning system.

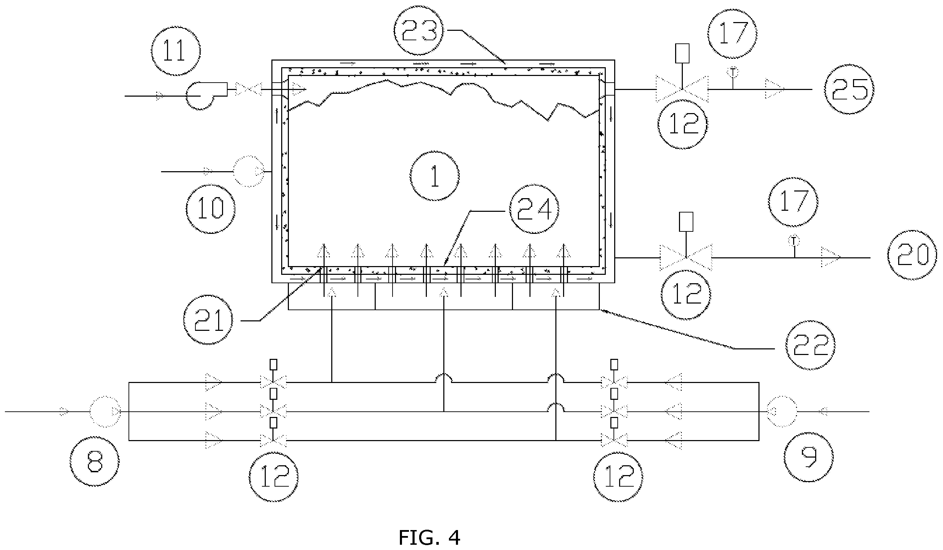

Figure 4 shows a detailed view of a first process stage chamber which is a gasification chamber with air/gas; fans, plenums, valves and nozzles.

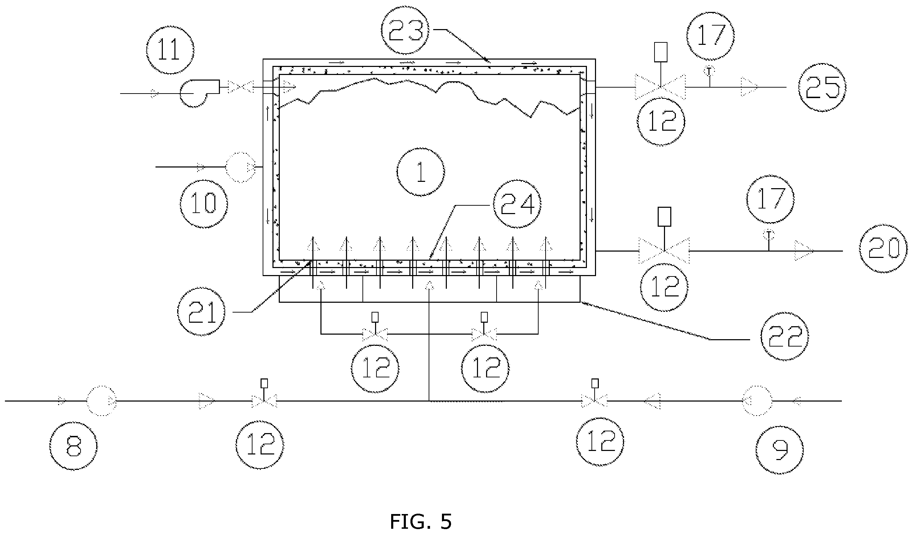

Figure 5 shows a detailed view of a first process stage chamber which is a gasification chamber with air/gas; fans, plenums, valves and nozzles in a simple version with less controllability than the version shown in figure 4.

The following numbers have been used for identifying the different components in the drawings:
1. Gasification chamber
2. Syngas combustion chamber
3. Energy recovery boiler (steam system)
4. Emission control system
5. Power island (steam turbine generator set & condensing equipment)
6. Induced draught (ID) fan
7. Exhaust stack
8. Recirculated flue-gas fan
9. Air fan
10. Cooling fluid fan for jacket cooling
11. Ignition burner
12. Valve
13. Syngas conditioning chamber
14. Syngas cleaning system
15. Syngas combustion in a boiler, reciprocating engine, gas turbine or other internal combustion device
16. Flare stack
17. Thermocouple (thermometer)
18. Draught sensor
19. Pre-warming burner(s)
20. Jacket air vent to user
21. Nozzles for flow of recirculated gas and air mixture from the plenums under the hearth to feed under the waste on top of the hearth.
22. Multiple sections air plenums
23. Jacket cooling void
24. Gasification chamber bottom hearth with nozzles open from the plenums below the hearth to the top surface of hearth (under the waste batch)
25. Syngas from gasification chamber

### Detailed description of the Invention

The individual components and stages of the process of the present invention will now be disclosed in detail.

### The first process stage chambers

The first process stage chambers, which are the gasification chambers, are equipped with double layer casings with external cooling jackets forming a cooling compartment (voids/channels) for the chambers cooling system. The chambers can be cooled by air, water, thermal oil, a combination of all or some other fluid as cooling media. The cooling system provides adequate cooling to the chambers walls, ceilings and bottoms.

In the case of air cooling an air fan on the gasification chamber is used to blow a controlled flow of ambient air into the external cooling jacket compartment (voids/channels) where the air cools the chamber surfaces while the air warms up. This pre-warmed air can be used as combustion air in the case of using a syngas combustion chamber as the second process stage. Alternatively the air can be used for anything where warm air is needed or it can be exhausted to atmosphere.

In the case of water cooling a water circulation pump is used to circulate a controlled flow of water through the gasification chambers cooling jackets. This system can be used as an integrated part of the energy recovery system for pre-heating boiler water or any other use where there is need for heated water.

Similarly other cooling fluids can be used for cooling purposes to absorb heat in the gasification chamber cooling compartment and to make use of the absorbed heat elsewhere. An example of this is to use the energy to preheat thermal oil which is used as the working media of a Rankin cycle system or for industrial or space heating use. Some of the flue-gas which is on its way to the system exhaust stack is diverted from the stack ductwork by the recirculated flue-gas fans to the gasification process. Each gasification chamber has a hearth with multiple nozzles at the bottom of the chamber. The nozzles penetrate through the hearth structure such that they form a number of small openings between the hearth top and bottom surfaces. The volume under the hearth has plenums which separate the hearth nozzles into nozzle areas corresponding to the gas/air plenums (plenum sections). The recirculated flue-gas enters the bottom plenums via split ductwork system such that after the split a separated duct branch with its own remotely controlled valve is provided for each plenum section for independent control of the recirculated flue gas flow to each plenum section. A system with identical function is provided for atmospheric air to feed the individual plenum section with atmospheric air.

With this system of fans, valves, ducts and nozzles the gasification process can as an example be started by feeding only the nozzles in the centre of the hearth with recirculated flue gas. Then, when the bulk of the batch has been consumed by the gasification the outer perimeter and corners of the hearth nozzle area are also fed with recirculated flue-gas. At the end of the process, atmospheric air would be fed via all nozzles in the hearth to produce quality ash with practically no carbon content. The gasification chambers are also equipped with one or more ignition burners on each chamber.

Each gasification chamber is equipped with a duct connecting the gasification chamber to the second process stage chamber. This duct has a valve which can be used to close the connected ductwork between the gasification chambers and the second process stage chamber (syngas combustion chamber or syngas conditioning chamber or syngas manifold), therefore effectively isolating that gasification chamber from the second process stage chamber or manifold.

### The second process stage as a syngas combustion chamber

The syngas combustion chamber is equipped with a variable flow combustion air inlet. The air for this inlet can be provided by the gasification chamber(s) cooling air fan which feeds air to the external jacket cooling system and from there to the syngas combustion chamber.

The syngas combustion chamber is equipped with recirculated flue gas fan system where flue-gas is diverted from the system stack via ductwork and fan to the entry side of the syngas combustion chamber. By controlling the flows of recirculated flue gas and combustion air both the temperature and the oxygen concentration of the flue-gas from the syngas combustion chamber can be controlled.

The syngas combustion chamber is equipped with one or more auxiliary fuel burners. These burners are used for pre-warming the syngas combustion chamber at time of system start-up. These burners are also automatically ignited to maintain process temperature above set point in case of disturbance in the flow of syngas to the syngas combustion chamber.

The syngas combustion chamber can be equipped with an emergency by pass stack which can be opened to vent flue-gas from the chamber from the exit end in case of equipment failure downstream of the chamber.

### The second process stage with a syngas conditioning chamber

The syngas conditioning chamber is provided to mix the syngas flows from the various first process stage chambers (the gasification chambers), into a consistent mixture for further processing or combustion.

The syngas from the syngas conditioning chamber is combusted in a reciprocating engine or gas turbine either directly from the syngas conditioning chamber or after additional cleaning in a syngas cleaning system. The quality of the syngas depends on the quality of the waste fuel or biomass processed in the system. The level of necessary purification and/or cleaning required before combusting in a reciprocating engine or gas turbine depends on the quality of the syngas.

The syngas conditioning chamber can be equipped with an emergency flare stack which can be used to vent syngas from the chamber from the exit end in case of equipment failure down-stream of the chamber or during start-up or shut down of the system. The flare stack is used to burn off the syngas, while it is not being combusted in a boiler, reciprocating engine, gas turbine or internal combustion device. The stack can have a built in burner and an air inlet which is used to ensure that only fully combusted flue-gas is emitted to atmosphere.

### The second process stage without a syngas conditioning chamber

If the syngas has little or no impurities the syngas can be routed directly through a common manifold to a boiler, gas turbine, reciprocating engine or other internal combustion device.

### Operation of the system of the invention

The operation of the first process stage is practically the same regardless if the second process stage is a syngas combustion chamber or syngas combustion in a boiler or internal combustion device with or without conditioning chamber and with or without syngas cooling and cleaning. The only difference is what kind of measurement of the process rate i.e. production of useful power and/or heat is used to control the rate of the syngas production. The first process stage operation will therefore be discussed first followed by the second process stage operation descriptions.

### First process stage, waste loading, ignition and ash discharge

The loading method for the system is dependent on the size of the gasification chambers. Loading systems can be select from; front end loader, telescopic handler, overhead cranes, conveyor loading or hand loading to mention a few. The waste is typically loaded through a loading door on the top of the chamber. After loading the waste into the gasification chamber(s) they are closed and sealed tight.

Following this the remotely controlled valve on the ductwork between the gasification chambers and the second process stage is opened. A small flow of gas/air mixture is then blown under the waste batch and a flame from an ignition burner(s) is lit for a short period of time. The burner(s) run until the temperature of the gas flowing from the gasification chamber reaches the burners upper temperature set-point as set in the control computer program. Once this temperature is reached, the burner shuts off automatically. The gasification of the waste starts in a matter of few minutes after ignition and continues while the gas/air mixture is fed under the waste batch and there is combustible material in the chamber. The rate of the gasification is governed by the flow rate of the gas /air mixture under the waste.

When all combustible materials have been consumed by the gasification process the flow of gas/air mixture is closed off with the remotely controlled valves and the gasification chamber is isolated again from the rest of the system by closing the remotely controlled valve on the ductwork between the gasification chamber and the second process stage. At this point the access doors can be opened to remove the ash and any non-combustible materials there may be left from the waste. The ash discharge method is dependent on the capacity of the system it can be done with a telehandler, push rams, scraping system, conveyors, trolleys and by hand tools to mention a few options.

### First process stage, continuous sequential operation

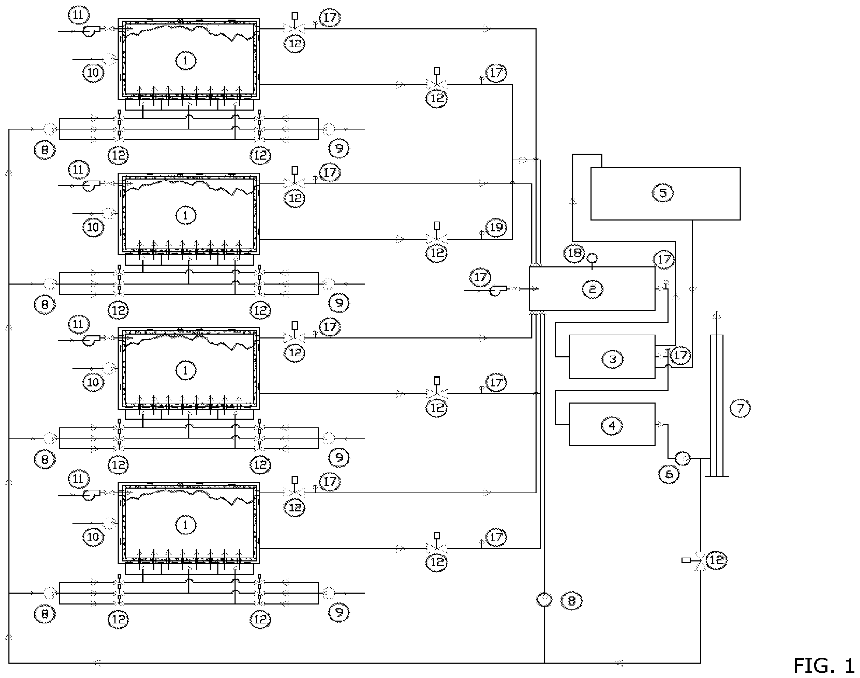

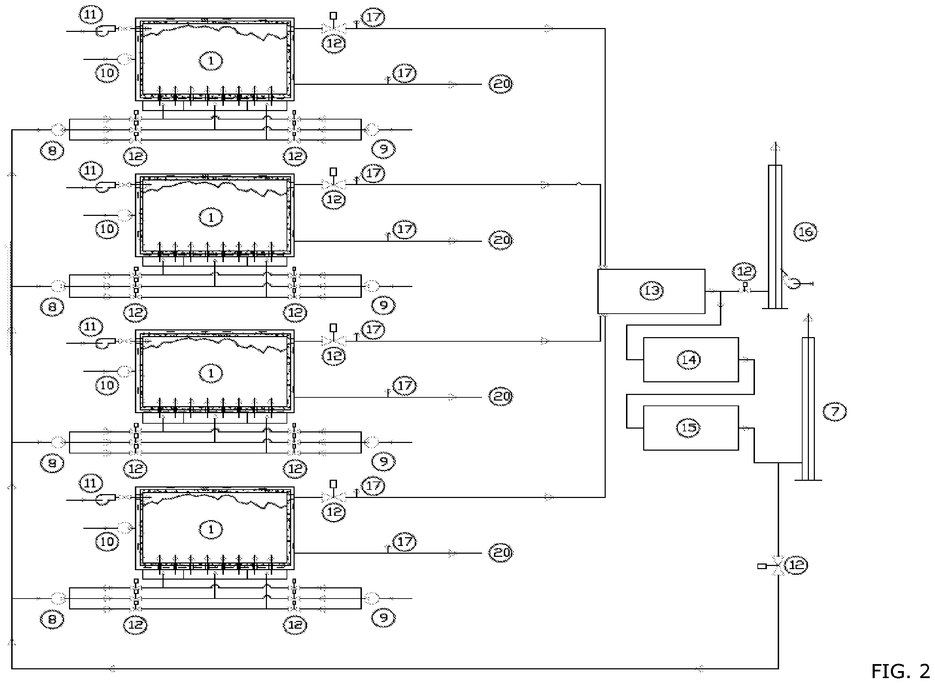

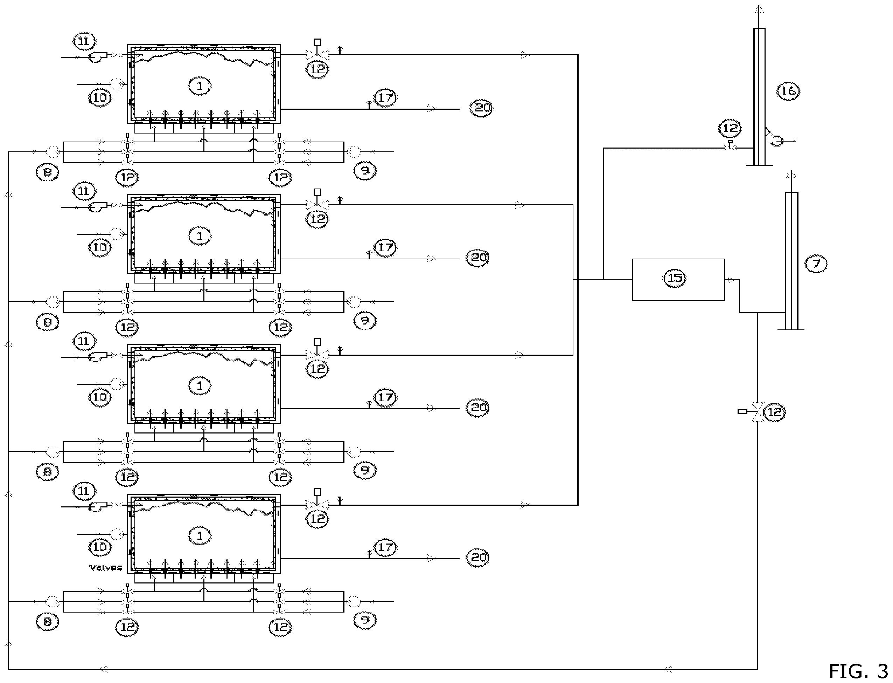

Figures 1, 2 and 3 show four gasification chambers connected via ductwork to a common second process stage. While this 4 to 1 setup may be a suitable configuration in many cases it is by no means a fixed setting. Maintaining smooth sequential operation in a system with only two gasification chambers can be difficult although not impossible. Also, a setup with more than six gasification chambers connected via ductwork to a common second stage chamber is also difficult. Because it can be technically complex to connect six gasification chambers to the entry end of one second process stage chamber. Therefore most systems intended for continuous sequential operation are designed to have 3-6 first process stage chambers.

During typical operation of a 4 to 1 gasification system two to three gasification chambers would be producing syngas by gasification which will have progressed to different level of completion since they would all have been started at a different time one after another. At the same time one chamber would possibly be just about completing its process of combusting any remains of carbon in the ash while another would be isolated from the rest of the system for ash discharge and reloading or already loaded sealed and the batch load ready for ignition.

The composition and the heat value of the syngas produced in these two to three chambers producing syngas at the same time would vary significantly as generally the heat value of the syngas peaks sometime after ignition and gradually trails off until there is very little heat value left in the waste batch at which time the product is fully combusted flue-gas rather than syngas. When the temperature of the gases flowing from the chamber start to drop it is a clear indication that all combustible elements have been consumed and it is time to stop to feed gas/air mixture to the plenums and nozzles. The control computer is programmed to make use of this information to stop the gas/air mixture flow.

Following this it is time to isolate the chamber from the reminder of the system by closing the valve on the duct between the gasification chamber and the syngas combustion chamber. Then the gasification chamber can be opened and ash removed and a new batch loaded into the chamber.

The chamber is fully cooled down as soon as the process is completed because of the jacket cooling system, therefore ensuring fast turnaround to get the chamber ready for the next gasification cycle.

The recirculated flue-gas and air fans and the individual gas/air plenums and valves under the gasification chamber hearth sections can be controlled in various ways depending on designers and operator preference, which can be varied from batch to batch by pre-programed settings and a selection of operator options. One typical version of this would be controlled such that at the beginning of the gasification cycle only the centre area of the hearth would be fed with recirculated flue-gas, then the sides would be added when the batch has been processed by half or so and at the same time higher oxygen concentration such as 50/50 air and recirculated flues gas would be fed to the centre plenum. Eventually the corner sections would be opened and feed first with a 50/50 gas/air mixture and for a short while at the end of the cycle all plenum sections would be fed with air to ensure good burnout of the combustible materials and high quality carbon free ash. The syngas temperature rises gradually over the course of the gasification cycle in each chamber which gives an indication of how the process is progressing, it is therefore easy to program procedures and operator options into the industrial control computer to automatically control how the fans and valves associated with the plenums and nozzles under the bottom hearths of the gasification chambers are controlled.

The overall flow of the gas/air mixture is controlled with a feedback signal from the second process stage. This signal is given by some measure of the production of useful power and/or heat, which is a clear indication of the corresponding process rate. These feedback signals are discussed further in the discussion below about the second process stage processes. The feedback signal is used to vary the overall flow of gas/air mixture under the waste batch and therefore the production of syngas.

When the gasification cycle is being started in a gasification chamber the initial flow of gas/air mixture fed under its waste batch is started at a pre-set level, but as soon as the process has started the automated industrial computer control takes over. The automated controls vary the gas/air flows under the waste batch up and down by equal amounts such that if the control system for example calls for an increase in the production of syngas which would for example call for the level of 1/10 increase of the flow, the system would add 1/10 of the gas/air flow under the waste in each chamber. Although this control feature will gently vary up and down the trend is though definitely always to increase the flow of gas/air mixture until the chamber has run its course in the gasification cycle and it is isolated from the reminder of the system. Further, since all the active gasification chambers were started at different times the chambers which were started earlier will already have higher flow setting and when the control system calls for the additional 1/10 increase the earliest chamber may for example already have progressed to 7/10 setting and therefore have a resulting setting of 8/10 while another one which was started later goes for example from a setting of 1/10 to 2/10. With this control method the smoothest changeover from one chamber to the next can be achieved as the chambers gasification cycle is started while at another moment a chamber may be taken off line because it has completed its cycle.

### Operation with a syngas combustion chamber

The syngas combustion chamber is preheated with auxiliary burners. The control system and the same burners also ensure that settable minimum temperature is always maintained in the chamber during operation. If the temperature in the chamber drops due any reason the burners will automatically be started to maintain the temperature above the limit. The burners are controlled automatically with variable fuel flow and they are shut down when not needed.

The combustion temperature in the syngas combustion chamber is adjusted to the desired temperature by controlling precisely the flow of gas/air mixture to be mixed with the syngas in the entry end of the chamber where the main mixing and combustion zone is. The temperature of the fully combusted flue-gas flowing from the chamber is constantly measured by a thermocouple and the signal fed to the industrial control computer where an output signal is produced to control the flow of gas/air mixture to the chamber inlet end by varying the speed of fan(s) and/or position of valve(s). An oxygen sensor is also provided to measure the oxygen concentration of the fully combusted flue-gas exiting the syngas combustion chamber. A signal from this sensor is used to control the ratio of the mixture of the combustion air and recirculated flue gas by varying the speed of fan(s) and/or position of valve(s).

The combustion air and recirculated flue gas is mixed with the syngas on the entry end of the syngas combustion chamber. The preheated cooling air from the gasification chamber jacket cooling system can be used as combustion air in the syngas combustion chamber. In that case the control computer controls the speed and selection of each of the cooling fans and their valves.

The flue-gas from the syngas combustion chamber is essentially the combined flow of syngas, recirculated flue-gas and the combustion air used for the combustion process in the syngas combustion chamber. The flow of fully combusted flue-gas governs the rate of useful power and/or heat production. Some form of measure of the power and/or heat produced is therefore used as a feedback signal to the gasification process for control of the syngas production. This can be:
- The power output of a steam turbine generator system which is proportional to the steam flow from the boiler, which again is proportional to the flow of flue-gas from the syngas combustion chamber.
- Steam flow meter signal which is proportional to the flow of flue-gas from the syngas combustion chamber.
- Speed indication of ID fan which indicates the total flow of flue-gas from the syngas combustion chamber.
- A measure of the flow of flue-gas flowing from the syngas combustion chamber

The syngas combustion chamber is designed with volume which is suitable to provide the maximum flow of flue-gas with at least the minimum residence time (usually minimum 2 seconds) at a temperature above the minimum required. In order to fulfil the applicable regulatory requirements the maximum flow of the flue-gas from the syngas chamber may not exceed its design boundaries i.e. the flow may not be so fast that the flue-gas does not spend at least the minimum time required in the control volume which is the designed residence time volume of the syngas combustion chamber. Therefore during all normal operation the flow of fully combusted flue-gas from the syngas combustion chamber is always kept within the limitation determined by the minimum residence time. There are no limitations as to how much below the residence time requirements the flow can be adjusted and there is no specific technical limitation to the minimum process rate. The operator can choose to operate at any process rate below the limits provided by regulations and safe operation practice.

### Start-up of a syngas combustion chamber in systems with induced draught (ID) fans

The whole gasification system and downstream equipment are kept under a controlled level of negative pressure in relation to the surrounding atmospheric pressure. This is done by controlling the speed of the induced draught fan (ID fan). The pressure difference between the inside of the syngas combustion chamber is measured with a draught sensor which produces a signal for the industrial control computer. The computer then produces a suitable output signal for the frequency controller of the ID fan which maintains the pressure difference to its set level.

Following this all necessary preparations are taken for start-up of the emissions control system and the energy recovery system.

When these processes have been started the burners on the syngas combustion chamber are started to warm up the syngas combustion chamber and the downstream equipment. The chamber is warmed up over some period of time and guidance is taken from the recommended warm-up profiles of the recovery boiler and the insulation materials in the syngas combustion chamber.

When the syngas combustion chamber, the boiler system and the emission control system have been started and warmed up along with all of their support systems the process in the gasification chambers can be started one after the other in sequence with periodic time delay between starting each chamber.

### Operation, combusting syngas in a boiler or an internal combustion device

Syngas from, the gasification of adequate heat value waste materials, fuels or biomass, containing little or no salts, chlorine, sulphur, acidic compounds, heavy metals or other impurities can be routed directly via manifold for combustion to a boiler, gas turbine, reciprocating engine or other internal combustion device without conditioning in a conditioning chamber. Depending on the combustion device the syngas may or may not need to be cooled prior to combustion. No oxygen containing gases are mixed with the syngas in the syngas manifold.

If a syngas conditioning chamber is used as part of the second process stage the syngas from the various gasification chambers is mixed to produce a consistent mix of syngas for further processing or combustion in a boiler, reciprocating engine, gas turbine or another internal combustion device with or without additional purification or cleaning. No oxygen containing gases are mixed with the syngas in the syngas conditioning chamber.

Syngas containing elevated levels of impurities such as sulphur compounds, hydrogen chloride, salts or other may need to be conditioned and/or cleaned. In such case, after the conditioning chamber the syngas will enter a recovery boiler to cool the gas then the gas goes to a water quench vessel where multiple high pressure water nozzles will spray water to mix with the syngas and dissolve the impurities. Alternatively the syngas may be directed directly to the quenching vessel. The moisture and droplets of water containing the impurities is removed from the syngas in a moisture separator. The impurities are removed from the water by neutralization and filtering. Alternatively, the syngas may be cleaned in a dry filtration process. The syngas flows on from the moisture separator or dry filtration process to a boiler, reciprocating engine, gas turbine or other internal combustion device for combustion.

To control the rate of the syngas production for these combustion processes the following can be used as feedback signal:
- The power output of the reciprocating engine generator set, which is proportional to the flow of syngas to the engine.
- The power output of the gas turbine generator set, which is proportional to the flow of syngas to the gas turbine.
- The steam flow from the boiler that the syngas is combusted in. The steam flow is proportional to the flow of syngas to the boiler.

### Start-up of a syngas conditioning chamber

A flare stack burner or a small by pass combustion chamber with a stack is started to ensure that no syngas escapes to atmosphere non-combusted when the process is started from cold. Then the syngas cleaning equipment is started if the system is so equipped. At this point the process in the gasification chambers can be started and as soon as the production is continuous and relatively stable the reciprocating engine or gas turbine can be started. When the syngas combustion in the engine or turbine has been started the flare stack can be gradually closed off and the burner shut down. Following this the syngas production rate can be taken up to desired level of power output.

### Energy recovery systems

In the version of the invention where the second process stage is a syngas combustion chamber the flow of superhot flue-gas is used to generate useful energy with a recovery boiler of some sort. Many commercially available options are suitable for this and even more different versions of how these options are formed into a functioning energy recovery system.

If electricity is the desired form of energy production from waste, fuel or biomass with the invention a common way to do so is to apply an energy recovery boiler system to the process to produce superheated steam. Where the superheated steam is used in a Rankin cycle process where steam turbine and electricity generator set produce electricity from the steam with the necessary condensers, cooling towers and other related equipment. Water for various usage can also be heated in a suitable recovery boiler.

Various other means can be applied for the recovery of energy from the waste, fuel or biomass in the case of the second process stage being a syngas combustion chamber all of which rely on making use of heat in the form of superhot flue-gas at a controllable temperature and flow rate.

In a version of the first aspect of the invention where the second process stage is syngas combustion in an internal combustion device of some sort, the main focus is to produce quality syngas for the production of useful energy such as in a boiler, reciprocating engine or a gas turbine with or without further purification and cleaning.

### General start-up of systems

Before starting up the gasification in the first process stage chambers the second process stage must be prepared and started-up. In essence most of the overall system is started back to front considering the gasification chambers to be the front and the exhaust stack the back. Steam turbines, gas turbines and reciprocating engines are though not started until the process has been brought up to some stable production of syngas.

## Claims

1. A process for thermal oxidation of combustible materials comprising the steps of:
a) gasification of combustible materials in two or more gasification chambers (1),
b) transferring syngas from the two or more gasification chambers (1) to a combustion unit (2), and
c) combustion of syngas from the two or more gasification chambers (1) in the combustion unit (2),
wherein external air, recirculated flue-gas from the combustion unit (2) or a mixture thereof is blown under a batch of the combustible material via nozzles (21) in separated nozzle areas in a hearth at the bottom of each of the two or more gasification chambers (1), said nozzle areas corresponding to plenum sections (22) under the hearth (24) of the bottom of each of the two or more gasification chambers (1), and wherein the flow of the external air and the recirculated flue-gas in each plenum section (22) area is regulated independently at different times of a gasification cycle.

2. The process according to claim 1, wherein the combustible materials comprise waste, fuel or biomass.

3. The process according to claims 1 or 2, wherein a flow of fully combusted flue gas from the combustion unit (2) is regulated by varying the production of syngas in the two or more gasification chambers (1) by a feedback signal.

4. The process according to claim 3, wherein the combustion unit (2) is a combustion chamber and the feedback signal is a signal from a steam flow meter, power output measure meter, speed indicator from an ID fan, flow signal from the outlet of the combustion unit (2) or a combination thereof.

5. The process according to claim 3-4, wherein the feedback signal is
- a power output of the reciprocating engine generator set,
- a power output of the gas turbine generator set, or
- a steam flow output from a boiler that the syngas is combusted in,
where the output is proportional to the flow of syngas to the respective combustion unit (2).

6. The process according to claim 1, wherein the overall flow of air and recirculated flue-gas to the hearth sections collectively is regulated.

7. The process according to any of the preceding claims, wherein the two or more gasification chambers (1) are connected to the same combustion unit (2) to provide a constant flow of syngas for combustion.

8. The process according to any of the preceding claims, wherein a mixture of external air flow and recirculated flue-gas is mixed in any ratio and introduced into a combustion unit (2) for the combustion of syngas.

9. The process according to claim 8, wherein the external air flow introduced into the combustion unit (2) is heated air from a cooling compartment of the two or more gasification chambers (1).

10. The process according to any of the preceding claims, wherein the flow of fully combusted flue gas is regulated by varying the production of syngas in the two or more gasification chambers (1) by a feedback signal from devices such as, but not limited to draught sensors, thermocouples, fan speeds indicators, steam flow meters, oxygen concentration meters and power production indicators.

11. An apparatus for thermal oxidation of combustible materials, the apparatus comprising:
- two or more gasification chambers (1) for gasification of combustible materials, the two or more gasification chambers (1) further comprising:
∘ a plurality of inlets at the bottom of the two or more gasification chambers (1),
∘ one or more burners,
- a combustion unit (2) for combustion of syngas from a first of the two or more gasification chambers (1), a second combustion unit (2) further comprising
∘ a gas inlet for receiving syngas from the two or more gasification chambers (1),
∘ a burner (11), and
∘ an outlet for disposing of flue-gas from the combustion unit (2),
- a duct to transfer syngas from each of the two or more gasification chambers (1) to the combustion unit (2), the duct further comprising a valve to isolate each of the two or more gasification chambers (1) from the combustion unit (2),
- a duct for re-directing flue-gas from the outlet of the combustion unit (2) into the two or more gasification chambers (1),
- an industrial computer,
wherein plenums under a bottom hearth form plenum sections (22),
wherein a plurality of nozzles (21) penetrating the bottom hearth of each of the two or more gasification chambers (1) form the plurality of openings into the gasification chamber (1), said nozzles (21) forming separated nozzle areas corresponding to the plenum sections (22),
the apparatus further adapted such that external air, recirculated flue-gas from the combustion unit (2) or a mixture thereof may be blown under a batch of the combustible material through the nozzles (21) of the separated nozzle areas at different times of a gasification cycle, and
such that the flow of the external air and the recirculated flue-gas in each plenum section (22) area may be regulated independently.

12. The apparatus according to claim 11, wherein each of the two or more gasification chambers (1) is surrounded by a cooling compartment (23) for cooling the two or more chambers (1).

13. The apparatus according to claim 11, wherein a syngas conditioning chamber (13) is placed between the two or more gasification chambers (1) and the combustion unit (2) connected with ducts to mix the syngas from the two or more gasification chambers (1) before it is routed to the combustion unit (2).

14. The apparatus according to claim 11, wherein the combustion unit (2) is a combustion chamber, a boiler, or a gas turbine.

## Patentansprüche

1. Verfahren zur thermischen Oxidation von brennbaren Materialien, umfassend die folgenden Schritte:
a) Vergasung brennbarer Materialien in zwei oder mehr Vergasungskammern (1),
b) Überführung von Synthesegas aus den zwei oder mehr Vergasungskammern (1) zu einer Verbrennungseinheit (2), und
c) Verbrennung von Synthesegas aus den zwei oder mehr Vergasungskammern (1) in der Verbrennungseinheit (2),
wobei externe Luft, rezirkuliertes Rauchgas aus der Verbrennungseinheit (2) oder ein Gemisch davon unter eine Charge des brennbaren Materials durch Düsen (21) in getrennten Düsenbereichen in einem Herd am Boden jeder der zwei oder mehr Vergasungskammern (1) geblasen wird,
wobei die Düsenbereiche Luftraumabschnitten (22) unter dem Herd (24) des Bodens jeder der zwei oder mehr Vergasungskammern (1) entsprechen, und wobei die Strömung der externen Luft und des rezirkulierten Rauchgases in jedem Bereich des Luftraumabschnitts (22) unabhängig zu verschiedenen Zeiten eines Vergasungszyklus geregelt wird.

2. Verfahren nach Anspruch 1, wobei die brennbaren Materialien Abfall, Brennstoff oder Biomasse umfassen.

3. Verfahren nach den Ansprüchen 1 oder 2, wobei eine Strömung von vollständig verbranntem Rauchgas aus der Verbrennungseinheit (2) durch Variieren der Produktion von Synthesegas in den zwei oder mehr Vergasungskammern (1) durch ein Rückmeldesignal geregelt wird.

4. Verfahren nach Anspruch 3, wobei die Verbrennungseinheit (2) eine Verbrennungskammer ist und das Rückmeldesignal ein Signal von einem Dampfdurchflussmesser, Leistungsabgabemessgerät, Geschwindigkeitsanzeiger von einem ID-Gebläse, Strömungssignal vom Auslass der Verbrennungseinheit (2) oder eine Kombination davon ist.

5. Verfahren nach Anspruch 3-4, wobei das Rückmeldesignal
- eine Leistungsabgabe des Hubkolbenmotor-Generatorsatzes,
- eine Leistungsabgabe des Gasturbinen-Generatorsatzes oder
- eine Dampfströmungsabgabe von einem Kessel, in dem das Synthesegas verbrannt wird, ist,
wobei die Abgabe proportional zur Strömung von Synthesegas zur jeweiligen Verbrennungseinheit (2) ist.

6. Verfahren nach Anspruch 1, wobei die Gesamtströmung von Luft und rezirkuliertem Rauchgas zu den Herdabschnitten gemeinsam geregelt wird.

7. Verfahren nach einem der vorhergehenden Ansprüche, wobei die zwei oder mehr Vergasungskammern (1) mit derselben Verbrennungseinheit (2) verbunden sind, um eine konstante Synthesegasströmung zur Verbrennung bereitzustellen.

8. Verfahren nach einem der vorhergehenden Ansprüche, wobei ein Gemisch aus externer Luftströmung und rezirkuliertem Rauchgas in einem beliebigen Verhältnis gemischt wird und in eine Verbrennungseinheit (2) zur Verbrennung von Synthesegas eingeleitet wird.

9. Verfahren nach Anspruch 8, wobei die in die Verbrennungseinheit (2) eingeleitete externe Luftströmung erwärmte Luft von einer Kühlkammer der zwei oder mehr Vergasungskammern (1) ist.

10. Verfahren nach einem der vorhergehenden Ansprüche, wobei die Strömung von vollständig verbranntem Rauchgas durch Variieren der Produktion von Synthesegas in den zwei oder mehr Vergasungskammern (1) durch ein Rückmeldesignal von Vorrichtungen wie beispielsweise, ohne aber darauf beschränkt zu sein, Luftzugsensoren, Temperaturfühlern, Lüftergeschwindigkeitsanzeigern, Dampfdurchflussmessern, Sauerstoffkonzentrationsmessern und Stromerzeugungsanzeigern geregelt wird.

11. Vorrichtung zur thermischen Oxidation von brennbaren Materialien, wobei die Vorrichtung das Folgende umfasst:
- zwei oder mehr Vergasungskammern (1) zur Vergasung von brennbaren Materialien, wobei die zwei oder mehr Vergasungskammern (1) ferner das Folgende umfassen:
- eine Vielzahl von Einlässen am Boden der zwei oder mehr Vergasungskammern (1),
- ein oder mehrere Brenner,
- eine Verbrennungseinheit (2) zur Verbrennung von Synthesegas aus einer ersten der zwei oder mehr Vergasungskammern (1), wobei eine zweite Verbrennungseinheit (2) ferner umfasst
- einen Gaseinlass zur Aufnahme von Synthesegas von den zwei oder mehr Vergasungskammern (1),
- einen Brenner (11) und
- einen Auslass zur Entsorgung von Rauchgas aus der Verbrennungseinheit (2),
- einen Kanal zur Überführung von Synthesegas von jeder der zwei oder mehr Vergasungskammern (1) zur Verbrennungseinheit (2), wobei der Kanal ferner ein Ventil zum Isolieren jeder der zwei oder mehr Vergasungskammern (1) von der Verbrennungseinheit (2) umfasst,
- einen Kanal zum Umleiten von Rauchgas vom Auslass der Verbrennungseinheit (2) in die zwei oder mehr Vergasungskammern (1),
- einen Industrierechner,
wobei Lufträume unter einem unteren Herd Luftraumabschnitte (22) bilden,
wobei eine Vielzahl von Düsen (21), die den unteren Herd jeder der zwei oder mehr Vergasungskammern (1) durchdringen, die Vielzahl von Öffnungen in die Vergasungskammer (1) bilden, wobei die Düsen (21) getrennte Düsenbereiche bilden, die den Luftraumabschnitten (22) entsprechen,
wobei die Vorrichtung ferner so angepasst ist, dass externe Luft, rezirkuliertes Rauchgas aus der Verbrennungseinheit (2) oder ein Gemisch davon unter eine Charge des brennbaren Materials durch die Düsen (21) der getrennten Düsenbereiche zu unterschiedlichen Zeiten eines Vergasungszyklus geblasen werden kann, und so dass die die Strömung der externen Luft und des rezirkulierten Rauchgases in jedem Luftraumabschnitt (22) unabhängig geregelt werden kann.

12. Vorrichtung nach Anspruch 11, wobei jede der zwei oder mehr Vergasungskammern (1) von einer Kühlkammer (23) zum Kühlen der zwei oder mehr Kammern (1) umgeben ist.

13. Vorrichtung nach Anspruch 11, wobei eine Synthesegas-Konditionierungskammer (13) zwischen den zwei oder mehr Vergasungskammern (1) und der Verbrennungseinheit (2) angeordnet ist, die mit Kanälen verbunden ist, um das Synthesegas aus den zwei oder mehr Vergasungskammern (1) zu mischen, bevor es zur Verbrennungseinheit (2) geleitet wird.

14. Vorrichtung nach Anspruch 11, wobei die Verbrennungseinheit (2) eine Verbrennungskammer, ein Kessel oder eine Gasturbine ist.

## Revendications

1. Procédé pour l'oxydation thermique de matériaux combustibles comprenant les étapes de :
a) gazéification de matériaux combustibles dans deux ou plus de deux chambres de gazéification (1),
b) transfert de gaz de synthèse provenant des deux ou plus de deux chambres de gazéification (1) vers une unité de combustion (2) et
c) combustion de gaz de synthèse provenant des deux ou plus de deux chambres de gazéification (1) dans l'unité de combustion (2),
dans lequel de l'air externe, du gaz effluent amené à recirculer provenant de l'unité de combustion (2) ou un mélange de ceux-ci est soufflé sous un lot du matériau combustible par le biais de buses (21) dans des zones de buse séparées dans une sole au fond de chacune des deux ou plus de deux chambres de gazéification (1), lesdites zones de buse correspondant à des sections de plénum (22) sous la sole (24) du fond de chacune des deux ou plus de deux chambres de gazéification (1), et dans lequel le flux de l'air externe et du gaz effluent amené à recirculer dans chaque zone de section de plénum (22) est régulé indépendamment à différents moments d'un cycle de gazéification.

2. Procédé selon la revendication 1, dans lequel les matériaux combustibles comprennent des déchets, du combustible ou de la biomasse.

3. Procédé selon les revendications 1 ou 2, dans lequel un flux de gaz effluent totalement brûlé provenant de l'unité de combustion (2) est régulé par variation de la production de gaz de synthèse dans les deux ou plus de deux chambres de gazéification (1) par un signal de rétroaction.

4. Procédé selon la revendication 3, dans lequel l'unité de combustion (2) est une chambre de combustion et le signal de rétroaction est un signal provenant d'un débitmètre de vapeur d'eau, d'un dispositif de mesure de puissance de sortie, d'un indicateur de vitesse provenant d'un ventilateur à tirage forcé, d'un signal de flux provenant de la sortie de l'unité de combustion (2) ou d'une combinaison de ceux-ci.

5. Procédé selon la revendication 3-4, dans lequel le signal de rétroaction est
- une puissance de sortie du groupe électrogène à moteur alternatif,
- une puissance de sortie du groupe électrogène à turbine à gaz ou
- un flux de sortie de vapeur d'eau provenant d'une chaudière dans laquelle le gaz de synthèse est brûlé,
la sortie étant proportionnelle au flux de gaz de synthèse allant vers l'unité de combustion (2) respective.

6. Procédé selon la revendication 1, dans lequel le flux global d'air et de gaz effluent amené à recirculer allant collectivement vers les sections de sole est régulé.

7. Procédé selon l'une quelconque des revendications précédentes, dans lequel les deux ou plus de deux chambres de gazéification (1) sont raccordées à la même unité de combustion (2) pour fournir un flux constant de gaz de synthèse pour la combustion.

8. Procédé selon l'une quelconque des revendications précédentes, dans lequel un mélange de flux d'air externe et de gaz effluent amené à recirculer est mélangé en un quelconque rapport et introduit dans une unité de combustion (2) pour la combustion de gaz de synthèse.

9. Procédé selon la revendication 8, dans lequel le flux d'air externe introduit dans l'unité de combustion (2) est de l'air chauffé provenant d'un compartiment de refroidissement des deux ou plus de deux chambres de gazéification (1).

10. Procédé selon l'une quelconque des revendications précédentes, dans lequel le flux de gaz effluent totalement brûlé est régulé par variation de la production de gaz de synthèse dans les deux ou plus de deux chambres de gazéification (1) par un signal de rétroaction provenant de dispositifs tels que, mais ils n'y sont pas limités, des capteurs de tirage, des thermocouples, des indicateurs de vitesses de ventilateur, des débitmètres de vapeur d'eau, des dispositifs de mesure de concentration d'oxygène et des indicateurs de production d'énergie électrique.

11. Appareil pour l'oxydation thermique de matériaux combustibles, l'appareil comprenant :
- deux ou plus de deux chambres de gazéification (1) pour la gazéification de matériaux combustibles, les deux ou plus de deux chambres de gazéification (1) comprenant en outre :
∘ une pluralité d'entrées au fond des deux ou plus de deux chambres de gazéification (1),
∘ un ou plusieurs brûleurs,
- une unité de combustion (2) pour la combustion de gaz de synthèse provenant d'une première des deux ou plus de deux chambres de gazéification (1), une seconde unité de combustion (2) comprenant en outre
∘ une entrée de gaz pour la réception de gaz de synthèse provenant des deux ou plus de deux chambres de gazéification (1),
∘ un brûleur (11) et
∘ une sortie pour le rejet de gaz effluent à partir de l'unité de combustion (2),
- une canalisation pour transférer du gaz de synthèse provenant de chacune des deux ou plus de deux chambres de gazéification (1) vers l'unité de combustion (2), la canalisation comprenant en outre une soupape pour isoler chacune des deux ou plus de deux chambres de gazéification (1) de l'unité de combustion (2),
- une canalisation pour le renvoi de gaz effluent provenant de la sortie de l'unité de combustion (2) dans les deux ou plus de deux chambres de gazéification (1),
- un ordinateur industriel,
dans lequel des plénums sous une sole de fond forment des sections de plénum (22),
dans lequel une pluralité de buses (21) pénétrant dans la sole de fond de chacune des deux ou plus de deux chambres de gazéification (1) forment la pluralité d'ouvertures dans la chambre de gazéification (1), lesdites buses (21) formant des zones de buse séparées correspondant aux sections de plénum (22),
l'appareil étant en outre conçu de façon telle que de l'air externe, du gaz effluent amené à recirculer provenant de l'unité de combustion (2) ou un mélange de ceux-ci peut être soufflé sous un lot du matériau combustible par les buses (21) des zones de buse séparées à différents moments d'un cycle de gazéification et
de façon telle que le flux de l'air externe et du gaz effluent amené à recirculé dans chaque zone de section de plénum (22) peut être régulé indépendamment.

12. Appareil selon la revendication 11, dans lequel chacune des deux ou plus de deux chambres de gazéification (1) est entourée d'un compartiment de refroidissement (23) pour le refroidissement des deux ou plus de deux chambres (1).

13. Appareil selon la revendication 11, dans lequel une chambre de conditionnement de gaz de synthèse (13) est disposée entre les deux ou plus de deux chambres de gazéification (1) et l'unité de combustion (2) raccordée avec des canalisations pour mélanger le gaz de synthèse provenant des deux ou plus de deux chambres de gazéification (1) avant qu'il soit envoyé vers l'unité de combustion (2).

14. Appareil selon la revendication 11, dans lequel l'unité de combustion (2) est une chambre de combustion, une chaudière ou une turbine à gaz.
